Europäisches Patentamt

European Patent Office

Office européen des brevets

(19)

(11) **EP 1 421 473 B1**

(12) **FASCICULE DE BREVET EUROPEEN**

(45) Date de publication et mention
de la délivrance du brevet:
**27.12.2006 Bulletin 2006/52**

(21) Numéro de dépôt: **02772475.6**

(22) Date de dépôt: **31.07.2002**

(51) Int Cl.:
**G06F 7/72** *(2006.01)*

(86) Numéro de dépôt international:
**PCT/FR2002/002769**

(87) Numéro de publication internationale:
**WO 2003/017087 (27.02.2003 Gazette 2003/09)**

(54) **PROCÉDÉ DE CALCUL UNIVERSEL APPLIQUÉ À DES POINTS D'UNE COURBE ELLIPTIQUE**

UNIVERSELLES BERECHNUNGSVERFAHREN FÜR PUNKTE AUF EINER ELLIPTISCHEN KURVE

UNIVERSAL CALCULATION METHOD APPLIED TO POINTS ON AN ELLIPTIC CURVE

(84) Etats contractants désignés:
**DE ES FR GB IT**

(30) Priorité: **17.08.2001 FR 0110873**

(43) Date de publication de la demande:
**26.05.2004 Bulletin 2004/22**

(73) Titulaire: **GEMPLUS**
**13420 Gémenos (FR)**

(72) Inventeur: **JOYE, Marc**
**F-83640 Saint Zacharie (FR)**

(56) Documents cités:
**FR-A- 2 791 497**

• **LIARDET P -Y ET AL: "Preventing SPA/DPA in ECC systems using the Jacobi form" CRYPTOGRAPHIC HARDWARE AND EMBEDDED SYSTEMS - CHES 2001. THIRD INTERNATIONAL WORKSHOP. PROCEEDINGS (LECTURE NOTES IN COMPUTER SCIENCE VOL. 2162), CRYPTOGRAPHIC HARDWARE AND EMBEDDED SYSTEMS - CHES 2001. THIRD INTERNATIONAL WORKSHOP. PROCEEDINGS, PARIS, pages 391-401, XP002197234 2001, Berlin, Germany, Springer-Verlag, Germany ISBN: 3-540-42521-7**
• **JOYE M ET AL: "Hessian elliptic curves and side-channel attacks" CRYPTOGRAPHIC HARDWARE AND EMBEDDED SYSTEMS - CHES 2001. THIRD INTERNATIONAL WORKSHOP. PROCEEDINGS (LECTURE NOTES IN COMPUTER SCIENCE VOL.2162), CRYPTOGRAPHIC HARDWARE AND EMBEDDED SYSTEMS - CHES 2001. THIRD INTERNATIONAL WORKSHOP. PROCEEDINGS, PARIS, pages 402-410, XP002197235 2001, Berlin, Germany, Springer-Verlag, Germany ISBN: 3-540-42521-7**
• **KOBLITZ N: "ELLIPTIC CURVE CRYPTOSYSTEMS" MATHEMATICS OF COMPUTATION, AMERICAN MATHEMATICAL SOCIETY, US, vol. 48, no. 177, 1987, pages 203-209, XP000671098**
• **I. BLAKE ET AL.: "Elliptic Curves in Cryptography" 1999, CAMBRIDGE UNIVERSITY PRESS , CAMBRIDGE, UK ISBN: 0 521 65374 6 pages 29-34 \* page 33, ligne 4 - page 34, ligne 5 \***

**Description**

La présente invention concerne un procédé de calcul universel appliqué à des points d'une courbe elliptique, et un composant électronique comprenant des moyens de mise en oeuvre d'un tel procédé. L'invention est notamment applicable pour la mise en oeuvre d'algorithmes cryptographiques du type à clé publique, par exemple dans des cartes à puce.

Les algorithmes à clé publique sur courbe elliptique permettent des applications cryptographiques de type chiffrement, signature numérique, authentification...

Ils sont notamment très utilisés dans des applications de type carte à puce, parce qu'ils permettent d'utiliser des clés de faible longueur, autorisant des temps de traitement assez courts, et qu'ils peuvent ne pas nécessiter l'utilisation de crypto-processeurs pour leur implémentation, ce qui diminue le prix de revient des composants électroniques dans lesquels ils sont implémentés.

Il existe différentes paramétrisations pour définir une courbe elliptique applicable en cryptographie. Une paramétrisation couramment utilisée est la paramétrisation dite de Weierstrass. On note cependant que la paramétrisation de Weierstrass est très générale puisque toute courbe elliptique peut se ramener sous cette paramétrisation.

Pour mémoire, si IK est un corps, l'ensemble des points $(X, Y) \in IK \times IK$, vérifiant l'équation générale de Weierstrass (formule F1):

$$E/IK \; : \; Y^2 \; + \; a1 \times X \times Y \; + \; a3 \times Y \; = \; X^3 \; + \; a2 \times X^2 \; + \; a4 \times X \; + \; a6$$

avec $ai \in IK$, et le point à l'infini $O$ forment une courbe elliptique E. Toute courbe elliptique sur un corps peut s'exprimer sous cette forme.

L'ensemble des points $(X, Y)$ et le point à l'infini $O$ forment un groupe abélien, dans lequel le point à l'infini $O$ est l'élément neutre et dans lequel l'opération de groupe est l'addition de points, notée + et donnée par la règle bien connue de la sécante et de la tangente. Dans ce groupe, la paire $(X, Y)$, où l'abscisse X et l'ordonnée Y sont des éléments du corps IK, forme les coordonnées affines d'un point P de la courbe elliptique.

Le point P représenté par la paire $(X, Y)$ en coordonnées affines peut aussi être représenté par des coordonnées projectives de la forme générale $(U, V, W)$.

Les coordonnées projectives sont notamment intéressantes dans les calculs d'exponentiation appliqués à des points d'une courbe elliptique, car ils ne comportent pas de calculs d'inversion dans le corps.

Le point P peut être représenté par des coordonnées projectives dites de Jacobi de la forme générale $(U, V, W)$, $(X, Y)$ et $(U, V, W)$ étant liés par les relations suivantes :

$$X = U/W^2 \quad et \quad Y = V/W^3 \qquad\qquad (formules \; F2)$$

Avec ces coordonnées de Jacobi, l'équation de Weierstrass d'une courbe elliptique devient :

$$E/IK \; : \; V^2 \; + \; a1UVW \; + \; a3VW^3 \; = \; U^3 \; + \; a2U^2W^2 \; + \; a4UW^4 \; + \; a6W^6.$$

Le point P peut encore être représenté par des coordonnées projectives dites homogènes de la forme générale $(U, V, W)$, $(X, Y)$ et $(U, V, W)$ étant cette fois liés par les relations :

$$X = U/W \quad et \quad Y = V/W \qquad\qquad (formules \; F3)$$

Avec ces coordonnées homogènes, l'équation de Weierstrass d'une courbe elliptique devient :

$$E/IK \; : \; V^2W \; + \; a1UVW \; + \; a3VW^2 \; = \; U^3 \; + \; a2U^2W \; + \; a4UW^2 \; + \; a6W^3$$

$$(\text{formule F4})$$

L'équation de Weierstrass peut se mettre sous une forme simplifiée selon la caractéristique du corps sur lequel la courbe est définie. On rappelle que dans un corps fini, le nombre d'éléments du corps s'exprime toujours sous la forme $p^n$, où p est un nombre premier. p est la caractéristique du corps. Si le corps n'est pas fini, la caractéristique est par convention définie égale à zéro.

Dans le cas où la caractéristique du corps est différente de 2 et 3, l'équation de Weierstrass, en coordonnées affines, se simplifie de la façon suivante :

$$E/IK \; : \; Y^2 = \; X^3 \; + \; a \times X \; + b, \qquad (\text{formule F5})$$

où a et b sont des paramètres de la courbe elliptique, éléments de IK.

De cette équation simplifiée en coordonnées affines se déduisent bien sûr des formulations équivalentes dans le cas d'une paramétrisation de Weierstrass en coordonnées projectives, de Jacobi ou homogènes.

Dans le cas où la caractéristique du corps est égale à 2, l'équation de Weierstrass d'une courbe non supersingulière, en coordonnées affines, se simplifie de la façon suivante :

$$E/IK \; : \; Y^2 \; + \; XY \; = \; X^3 \; + \; a \times X^2 \; + b, \qquad (\text{formule F6})$$

où a et b sont des paramètres de la courbe elliptique, éléments de IK.

De cette équation simplifiée en coordonnées affines se déduisent bien sûr de même que précédemment des formulations équivalentes dans le cas d'une paramétrisation de Weierstrass en coordonnées projectives, de Jacobi ou homogènes.

Selon la paramétrisation qui définit la courbe elliptique et selon les coordonnées avec lesquelles on travaille, différentes formules d'addition, de soustraction et de doublement de points sont applicables. Ces formules sont données dans de nombreuses références connues de l'homme de métier. On note également que dans le cas de coordonnées projectives, les formules ne sont pas uniques car, comme le montrent les formules F2 et F3, un point en coordonnées affines a plusieurs représentations projectives équivalentes.

Dans l'exemple d'une courbe elliptique E donnée par une paramétrisation de Weierstrass en coordonnées affines, ces formules sont les suivantes (cf le document I. Blake et al : "Elliptic Curves in Cryptography", 1999, Cambridge University Press, ISBN 0 521 653746, pp29-34).

L'inverse d'un point P1=(X1, Y1) de cette courbe est le point -P1 de coordonnées (X1, Y1), avec

$$\overline{Y1} \; = \; -Y1 \; - \; a1 \times X1 \; - \; a3 \qquad (\text{formule F11})$$

L'opération d'addition des points P1 de coordonnées (X1, Y1) et P2 de coordonnées (X2, Y2) de cette courbe, avec P1 $\neq$ -P2, donne un point P3 = P1 + P2, de coordonnées (X3, Y3) telles que :

$$X3 \; = \; \lambda^2 \; + \; a1 \times \lambda \; - \; a2 \; - \; X1 \; - \; X2 \qquad (\text{formule F12})$$

$$Y3 \; = \; - \; (\lambda \; + \; a1) \times X3 \; - \; \mu \; - \; a3, \qquad (\text{formule F13})$$

avec

$$\lambda \; = \; (Y1 - Y2)/(X1 - X2), \; si \; X1 \; \neq \; X2 \qquad (\text{formule F14})$$

$$\lambda = (3X1^2 + 2\times a2\times X1 + a4 - a1\times Y1)$$
$$/ (2Y1 + a1\times X1 + a3),\ si\ X1 = X2 \quad (formule\ F15)$$

et

$$\mu = Y1 - \lambda\times X1 \qquad\qquad (formule\ F16)$$

La formule F14 est la formule d'addition de deux points distincts : P3 = P1 + P2 tandis que la formule F15 est la formule de doublement du point : P3 = 2×P1.

De ces équations en coordonnées affines se déduisent bien sûr des formulations équivalentes en coordonnées projectives, de Jacobi ou homogènes.

Dans l'exemple d'une courbe elliptique E donnée par une paramétrisation de Weierstrass sur un corps de caractéristique différente de 2 et 3, les formules d'addition, de soustraction et de doublement de points se simplifient puisque l'équation de la courbe elle-même se réduit. On pose a1 = a2 = a3 = 0, a4 = a et a5 = b.

Dans le cas d'une paramétrisation de Weierstrass en coordonnées affines, les formules simplifiées d'addition, de soustraction et de doublement de points sont alors les suivantes.

L'inverse d'un point P1 = (X1, Y1) de la courbe E est le point - P1 = (X1, Y1) avec

$$\overline{Y1} = - Y1 \qquad (formule\ F17)$$

L'opération d'addition des points P1 de coordonnées (X1, Y1) et P2 de coordonnées (X2, Y2) de cette courbe, avec P1 ≠ - P2, donne le point P3 = P1 + P2 dont les coordonnées (X3, Y3) sont telles que :

$$X3 = \lambda^2 - X1 - X2$$

$$Y3 = \lambda\times(X1-X3) - Y1,$$

avec

$$\lambda = (Y1-Y2)/(X1-X2),\ si\ P1 \neq P2 \qquad (formule\ 18)$$

$$\lambda = (3\times X1^2+a) / (2\times Y1),\ si\ P1 = P2 \qquad (formule\ 19)$$

La formule 18 est la formule d'addition de deux points distincts : P3 = P1 + P2 tandis que la formule 19 est la formule de doublement du point : P3 = 2×P1.

Les formules simplifiées d'addition et de doublement de points sur une courbe elliptique non supersingulière définie sur un corps de caractéristique 2 s'obtiennent de façon similaire à partir des formules générales (formules F12 à F16) en posant a1 = 1, a3 = a4 = 0, a2 = a et a6 = b.

Les opérations d'addition ou soustraction et de doublement d'un point sont les opérations de base utilisées dans les algorithmes d'exponentiation sur les courbes elliptiques : étant donné un point P1 appartenant à une courbe elliptique E et d un nombre prédéterminé (un entier), le résultat de la multiplication scalaire du point P1 par le nombre d est un point P2 de la courbe E tel que P2 = d×P1 = P1 + P1 +... + P1, d fois. Les algorithmes cryptographiques à clé publique sur courbe elliptique sont ainsi basés sur la multiplication scalaire d'un point P1 sélectionné sur la courbe, par un nombre prédéterminé d, une clé secrète. Le résultat de cette multiplication scalaire dxP1 est un point P2 de la courbe elliptique. Dans un exemple d'application au chiffrement selon le procédé de El Gamal, le point P2 obtenu est la clé publique qui sert au chiffrement d'un message.

Le calcul de la multiplication scalaire P2 = d×P1 peut être réalisé par différents algorithmes. On peut en citer quelques-uns uns, comme l'algorithme de doublement et d'addition (double and add dans la littérature anglo-saxonne) basé sur la représentation binaire de l'exposant d, celui d'addition-soustraction basé sur la représentation binaire signée de l'exposant d, l'algorithme avec fenêtre... Tous ces algorithmes utilisent les formules d'addition, de soustraction et de doublement définies sur les courbes elliptiques.

Cependant, ces algorithmes se révèlent sensibles aux attaques visant à découvrir notamment la valeur de la clé secrète. On peut citer notamment les attaques à canaux cachés, simples ou différentielles.

On entend par attaque à canal caché simple ou différentielle, une attaque basée sur une grandeur physique mesurable de l'extérieur du dispositif, et dont l'analyse directe (attaque simple) ou l'analyse selon une méthode statistique (attaque différentielle) permet de découvrir des informations contenues et manipulées dans des traitements dans le dispositif. Ces attaques peuvent ainsi permettre de découvrir des informations confidentielles. Ces attaques ont notamment été dévoilées par Paul Kocher (Advances in Cryptology - CRYPTO'99, vol. 1666 of Lecture Notes in Computer Science, pp.388-397. Springer-Verlag, 1999). Parmi les grandeurs physiques qui peuvent être exploitées à ces fins, on peut citer le temps d'exécution, la consommation en courant, le champ électromagnétique rayonné par la partie du composant utilisée pour exécuter le calcul, etc. Ces attaques sont basées sur le fait que la manipulation d'un bit, c'est à dire son traitement par une instruction particulière, a une empreinte particulière sur la grandeur physique considérée selon la valeur de ce bit et/ou selon l'instruction.

Dans les systèmes cryptographiques basés sur des courbes elliptiques, ces attaques visent la multiplication scalaire.

Si on prend l'exemple d'un algorithme de multiplication scalaire sur courbes elliptiques avec la paramétrisation de Weierstrass, cet algorithme peut être susceptible aux attaques à canaux cachés de type simple, car les opérations de base de doublement et d'addition sont sensiblement différentes comme le montre le calcul du lambda dans les formules F14 et F15 ou F18 et F19 supra.

Il est donc nécessaire de prévoir des procédés de contre-mesure permettant d'empêcher les différentes attaques de prospérer. En d'autres termes, il est nécessaire de sécuriser les algorithmes de multiplication scalaire.

Un objet de l'invention est mettre en oeuvre un procédé de calcul universel, et plus généralement un procédé cryptographique, sur courbes elliptiques, protégé contre les attaques à canaux cachés.

Avec cet objectif en vue, l'invention a pour objet un procédé de calcul universel sur des points d'une courbe elliptique définie par une équation de Weierstrass. Selon l'invention, des moyens de calcul programmés identiques sont utilisés pour réaliser une opération d'addition de points et une opération de doublement de points. Les moyens de calcul comprennent notamment une unité centrale et une mémoire.

Ainsi, avec l'invention, les opérations de base de doublement et d'addition de points d'une courbe elliptique sont identiques, réalisées par des moyens de calcul identiques, elles ont la même formulation. Il n'est donc plus possible de les distinguer, notamment dans le cadre d'attaques à canaux cachés simples. En conséquence, un procédé de calcul universel selon l'invention est protégé contre de tels attaques.

Plus généralement, un procédé de multiplication scalaire appliqué à des points d'une courbe elliptique, ou un procédé cryptographique sur courbe elliptique utilisant un procédé de calcul universel selon l'invention, sont protégés de la même manière.

Ceci est vrai quelles que soient les coordonnées utilisées pour réaliser les calculs : coordonnées affines, projectives, de Jacobi ou homogènes, etc. On utilise ainsi une seule valeur de lambda pour réaliser une addition ou un doublement de points.

Selon un mode de réalisation général, pour réaliser l'addition d'un premier point P1 défini par des premières coordonnées affines (X1, Y1) et d'un deuxième point P2 défini par des deuxièmes coordonnées affines (X2, Y2), les coordonnées affines du premier point P1 et celles du deuxième point P2 étant mémorisées dans des premiers et deuxièmes registres de la mémoire, le premier point et le deuxième point appartenant à une courbe elliptique définie par une équation de Weierstrass de type :

$$Y^2 + a1{\times}X{\times}Y + a3{\times}Y = X^3 + a2{\times}X^2 + a4{\times}X + a6,$$

(X, Y) étant des coordonnées affines d'un point de la courbe, et a1, a2, a3, a4, a5, a6 étant des paramètres de la courbe elliptique,

les moyens de calcul programmés calculent des troisièmes coordonnées affines (X3, Y3) définissant un troisième point P3, résultat de l'addition, par les relations suivantes :

$$X3 = \lambda^2 + a1{\times}\lambda - a2 - X1 - X2 \qquad \text{(formule F12)}$$

$$Y3 = - (\lambda + a1) \times X3 - \mu - a3 \qquad \text{(formule F13)}$$

avec :

$$\lambda = (X1^2 + X1 \times X2 + X2^2 + a2 \times X1 + a2 \times X2 + a4 - a1 \times Y1)$$
$$/ (Y1 + Y2 + a1 \times X2 + a3) \qquad \text{(formule F20)}$$

$$\mu = Y1 - \lambda \times X1 \qquad \text{(formule F16)}$$

le deuxième point étant différent de l'inverse (-P1) du premier point P1 et le deuxième point étant égal ou différent du premier point,
puis mémorisent les troisièmes coordonnées affines (X3, Y3) dans des troisièmes registres de la mémoire.

La relation $\lambda$, définie par la formule F20 est identique à la relation $\lambda$ de l'art antérieur définie par la formule F14, dans le cas où X1 ≠ X2, c'est-à-dire dans le cas où P1 ≠ P2 (cas d'une véritable addition de deux points distincts). De la même façon la relation $\lambda$, définie par la formule F20 est identique à la relation $\lambda$ de l'art antérieur définie par la formule F15, dans le cas où X1 = X2 (cas d'une opération de doublement d'un point), c'est-à-dire dans le cas où P1 = P2 doublement d'un point). Ceci sera montré plus précisément par la suite dans un exemple.

La même valeur de lambda permet ainsi de réaliser une addition ou un doublement de points dans le cas d'une courbe elliptique définie par une paramétrisation de Weierstrass.

Selon un autre mode de réalisation, pour réaliser l'addition du premier point P1 défini par les premières coordonnées affines (X1, Y1) et du deuxième point P2 défini par les deuxièmes coordonnées affines (X2, Y2), les coordonnées affines du premier point P1 et celles du deuxième point P2 étant mémorisées dans les premiers et deuxièmes registres de la mémoire, le premier point et le deuxième point appartenant à une courbe elliptique sur un corps de caractéristique différente de 2 ou 3, définie par une équation simplifiée de Weierstrass de type :

$$Y^2 = X^3 + a \times X + b,$$

(X, Y) étant des coordonnées affines d'un point de la courbe, et a, b étant des paramètres de la courbe elliptique, les moyens de calcul programmés calculent les troisièmes coordonnées affines (X3, Y3) définissant le troisième point P3, résultat de l'addition, par les relations suivantes :

$$X3 = \lambda^2 - X1 - X2$$

$$Y3 = \lambda \times (X1 - X3) - Y1$$

avec :

$$\lambda = (X1^2 + X1 \times X2 + X2^2 + a) / (Y1 + Y2) \qquad \text{(formule F21)}$$

le deuxième point étant différent de l'inverse (-P1) du premier point P1 et le deuxième point étant égal ou différent du premier point,
puis mémorisent les troisièmes coordonnées affines (X3, Y3) dans les troisièmes registres de la mémoire.

Là encore, la même valeur de lambda permet de réaliser une addition ou un doublement de points dans le cas d'une courbe elliptique sur un corps de caractéristique différente de 2 et 3 et définie par une paramétrisation de Weierstrass simplifiée.

Selon un autre mode de réalisation également, pour réaliser l'addition du premier point P1 défini par les premières coordonnées affines (X1, Y1) et du deuxième point P2 défini par les deuxièmes coordonnées affines (X2, Y2), les coordonnées affines du premier point P1 et celles du deuxième point P2 étant mémorisées dans les premiers et deuxièmes registres de la mémoire (6, 8), le premier point et le deuxième point appartenant à une courbe elliptique non supersingulière sur un corps de caractéristique égale à 2, définie par une équation simplifiée de Weierstrass de type :

$$Y^2 + XY = X^3 + a \times X^2 + b,$$

(X, Y) étant des coordonnées affines d'un point de la courbe, et a, b étant des paramètres de la courbe elliptique, les moyens de calcul programmés calculent les troisièmes coordonnées affines (X3, Y3) définissant le troisième point P3, résultat de l'addition, par les relations suivantes :

$$X3 = \lambda^2 + \lambda + a + X1 + X2$$

$$Y3 = \lambda \times (X1 + X3) + X3 + Y1$$

avec :

$$\lambda = (X1^2 + X1 \times X2 + X2^2 + aX1 + aX2 + Y1) \ / \ (Y1 + Y2 + X2)$$
$$(formule \ F22)$$

le deuxième point étant différent de l'inverse (-P1) du premier point P1 et le deuxième point étant égal ou différent du premier point,

Là encore, la même valeur de lambda permet de réaliser une addition ou un doublement de points dans le cas d'une courbe elliptique non supersingulière sur un corps de caractéristique égale à 2.

Comme on vient de le voir, le procédé de calcul selon l'invention permet de réaliser des opérations d'addition ou de doublement de points appartenant à des courbes elliptiques, en utilisant la même formulation.

Plus généralement, le procédé selon l'invention peut être utilisé dans un procédé global de calcul de multiplication scalaire appliqué à des points d'une courbe elliptique et /ou dans un procédé cryptographique.

L'invention a également pour objet un composant électronique comprenant des moyens de calcul programmés, comprenant notamment une unité centrale et une mémoire, pour mettre oeuvre un procédé de calcul universel pour effectuer une addition ou un doublement de points d'une courbe elliptique tel que décrit ci-dessus. Ledit composant électronique peut comprendre des moyens de mise en oeuvre globale d'un algorithme cryptographique utilisant un procédé de calcul universel tel que décrit ci-dessus.

Enfin, l'invention a également pour objet une carte à puce comprenant un composant électronique tel que décrit ci-dessus.

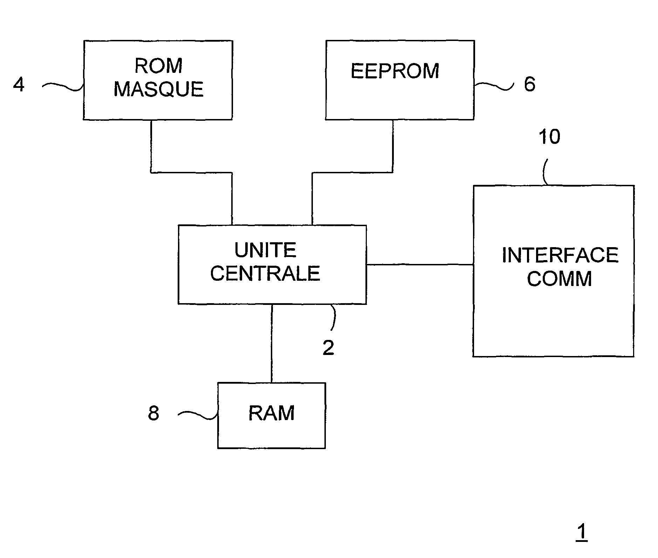

L'invention et les avantages qui en découlent apparaîtront plus clairement à la lecture de la description qui suit d'exemples particuliers de réalisation de l'invention, donnés à titre purement indicatif et en référence à la figure unique en annexe. Celle-ci représente sous forme de schéma bloc un dispositif 1 électronique apte à réaliser des calculs cryptographiques.

Dans les exemples suivants, le dispositif 1 est une carte à puce destinée à exécuter un programme cryptographique. A cette fin, le dispositif 1 réunit dans une puce des moyens de calcul programmés, composés d'une unité centrale 2 reliée fonctionnellement à un ensemble de mémoires dont :

- une mémoire 4 accessible en lecture seulement, dans l'exemple du type ROM masque, aussi connue sous l'appellation anglaise "mask read-only memory (mask ROM)" ,
- une mémoire 6 re-programmable électriquement, dans l'exemple du type EEPROM (de l'anglais "electrically erasable programmable ROM"), et
- une mémoire de travail 8 accessible en lecture et en écriture, dans l'exemple du type RAM (de l'anglais "random access memory"). Cette mémoire comprend notamment des registres de calcul utilisés par le dispositif 1.

Le code exécutable correspondant à l'algorithme d'exponentiation est contenu en mémoire programme. Ce code peut en pratique être contenu en mémoire 4, accessible en lecture seulement, et/ou en mémoire 6, réinscriptible.

L'unité centrale 2 est reliée à une interface de communication 10 qui assure l'échange de signaux vis-à-vis de l'extérieur et l'alimentation de la puce. Cette interface peut comprendre des plots sur la carte pour une connexion dite "à contact" avec un lecteur, et/ou une antenne dans le cas d'une carte dite "sans contact".

L'une des fonctions du dispositif 1 est de chiffrer ou déchiffrer un message m confidentiel respectivement transmis vers, ou reçu de, l'extérieur. Ce message peut concerner par exemple des codes personnels, des informations médicales, une comptabilité sur des transactions bancaires ou commerciales, des autorisations d'accès à certains services restreints, etc. Une autre fonction est de calculer ou de vérifier une signature numérique.

Pour réaliser ces fonctions, l'unité centrale 2 exécute un algorithme cryptographique sur des données de programmation qui sont stockées dans les parties ROM masque 4 et/ou EEPROM 6.

L'algorithme utilisé ici est un algorithme à clé publique sur courbe elliptique dans le cadre d'une paramétrisation de Weierstrass. On s'intéressera plus précisément ici à une partie de cet algorithme, qui permet de réaliser des opérations de base, c'est-à-dire des opérations d'addition ou de doublement de points, en coordonnées affines.

Dans un premier exemple, la courbe elliptique est une courbe sur un corps de caractéristique strictement supérieure à 3, ayant pour équation, avec a, b ? IK :

$$E/IK \; : \; Y^2 \; = \; X^3 \; + \; a{\times}X \; + \; b$$

Lorsque le dispositif 1 de calcul d'exponentiation est sollicité pour le calcul d'une opération d'addition, l'unité centrale 2 mémorise tout d'abord des coordonnées (X1, Y1), (X2, Y2) de deux points P1, P2 de la courbe elliptique, à additionner. On suppose ici que le point P2 est différent du point inverse (-P1) du point P1.

L'unité centrale 2 calcule ensuite une variable intermédiaire λ selon la relation :

$$\lambda \; = \left(X1^2{+}X1{\times}X2{+}X2^2{+}a\right) \; / \; (Y1{+}Y2)$$

(formule F21, voir page 10, ligne 11)

L'unité centrale mémorise la variable λ dans un registre de la mémoire de travail 8 puis calcule ensuite les coordonnées (X3, Y3) du point P3, résultat de l'addition du point P1 et du point P2 :

$$X3 \; = \; \lambda^2 \; - \; X1 \; - \; X2$$

$$Y3 \; = \; \lambda{\times}(X1 \; - \; X3) \; - \; Y1$$

Les coordonnées (X3, Y3) sont finalement mémorisées dans des autres registres de la mémoire de travail 8, pour être utilisées par ailleurs, par exemple pour la suite de l'algorithme de chiffrement.

Dans cet exemple également, la relation λ, définie par la formule F21 est identique à la relation λ de l'art antérieur définie par la formule F18, dans le cas où X1 ≠ X2, c'est-à-dire dans le cas où P1 ≠ P2 (cas d'une véritable addition de points distincts).

En effet, partant de la relation F18, on a λ = (Y1-Y2)/(X1-X2), si X1 ≠ X2 , soit :

$$\lambda \; = \; (Y1{-}Y2) \; / \; (X1{-}X2) \; = \; [(Y1{-}Y2)(Y1 \; - \; \overline{Y2})]$$
$$/ \; [(X1{-}X2)(Y1 \; - \; \overline{Y2})]$$
$$= \; (Y1^2{-}Y2^2)/[(X1{-}X2)(Y1{+}Y2)]$$

car $\overline{Y}2 = -Y2$ (formule F17) dans cet exemple, on en déduit :

$$\lambda \; = \; (X1^3{+}a{\times}X1{-}X2^3{-}a{\times}X2) \; / \; [(X1{-}X2)(Y1{+}Y2)]$$

car $Yi^2 = Xi^3 + a{\times}Xi + b$ pour un point Pi de la courbe elliptique considérée dans cet exemple, le point Pi ayant pour coordonnées (Xi, Yi). Il vient ainsi :

$$\lambda \;=\; (X1^2 \;+\; X1{\times}X2 \;+\; X2^2 \;+\; a) \;/\; (Y1 \;+\; Y2),$$

soit la formule F21.

De la même façon, la relation $\lambda$, définie par la formule F21 est identique à la relation $\lambda$ de l'art antérieur définie par la formule F19, dans le cas où X1 = X2 (cas d'une opération de doublement d'un point), c'est-à-dire dans le cas où P1 = P2. En effet, partant de la formule F21, en prenant X1 = X2 et Y1 = Y2, il vient immédiatement :

$$\lambda \;=\; (3{\times}X1^2 \;+\; a) \;/\; (2{\times}Y1) \qquad\qquad (\text{formule F16})$$

La même valeur de lambda permet ainsi de réaliser une addition ou un doublement de points dans le cas d'une courbe elliptique de caractéristique strictement supérieure à 3 et définie par une paramétrisation de Weierstrass simplifiée.

Dans un deuxième exemple, la courbe elliptique est une courbe non supersingulière sur un corps de caractéristique égale à 2, ayant pour équation, avec a, b ? IK :

$$E/IK \;:\; Y^2 \;+\; XY \;=\; X^3 \;+\; a{\times}X^2 \;+\; b$$

De même que dans l'exemple précédent, lorsque le dispositif 1 de calcul d'exponentiation est sollicité pour le calcul d'une opération d'addition, l'unité centrale 2 mémorise tout d'abord les coordonnées (X1, Y1), (X2, Y2) de deux points P1, P2 à additionner. On suppose là encore que le point P2 est différent d'un point inverse (-P1) du point P1.

L'unité centrale 2 calcule ensuite une variable intermédiaire $\lambda$ selon la relation :

$$\lambda \;=\; (X1^2{+}X1{\times}X2{+}X2^2{+}aX1{+}aX2{+}Y1) \;/\; (Y1{+}Y2{+}X2)$$
$$(\text{formule F21})$$

L'unité centrale mémorise la variable $\lambda$ dans un registre de la mémoire de travail 8 puis calcule ensuite les coordonnées (X3, Y3) du point P3, résultat de l'addition du point P1 et du point P2 :

$$X3 \;=\; \lambda^2 \;+\; \lambda \;+\; a \;+\; X1 \;+\; X2$$

$$Y3 \;=\; \lambda{\times}(X1 \;+\; X3) \;+\; X3 \;+\; Y1$$

Les coordonnées (X3, Y3) sont finalement mémorisées dans des autres registres de la mémoire de travail 8, pour être utilisées par ailleurs.

Dans cet exemple également, la relation $\lambda$, définie par la formule F21 est identique à la relation $\lambda$ de l'art antérieur définie par la formule F18, dans le cas où X1 $\neq$ X2, c'est-à-dire dans le cas où P1 $\neq$ P2 (cas d'une véritable addition de points distincts).

La même valeur de lambda permet ainsi de réaliser une addition ou un doublement de points dans le cas d'une courbe elliptique de caractéristique égale à 2 et définie par une paramétrisation de Weierstrass.

On notera que dans tous les exemples décrits ci-dessus, des coordonnées affines ont été utilisées. Il est cependant tout à fait possible d'utiliser des coordonnées projectives, homogènes ou de Jacobi. On veillera simplement le cas échéant à réécrire les formules sous forme projective.

Pour cela, on remplacera, dans les formules de $\lambda$, de X3 et de Y3 données en exemple, les coordonnées affines Xi, Yi par :

\* en coordonnées projectives de Jacobi:

$$\texttt{Xi = Ui/Wi}^2 \quad \texttt{et Yi = Vi/Wi}^3,$$

\* en coordonnées projectives homogènes :

$$\texttt{Xi = Ui/Wi} \quad \texttt{et Yi = Vi/Wi.}$$

**Revendications**

1. Procédé cryptographique dans lequel des moyens automatiques réalisent une addition d'un premier point P1 défini par des premières coordonnées affines (X1, Y1) et d'un deuxième point P2 défini par des deuxièmes coordonnées affines (X2, Y2), ces premier et deuxième points appartenant à une courbe elliptique définie par une équation de Weierstrass de type :

$$\texttt{Y}^2 \texttt{ + a1}\times\texttt{X}\times\texttt{Y + a3}\times\texttt{Y = X}^3 \texttt{ + a2}\times\texttt{X}^2 \texttt{ + a4}\times\texttt{X + a6,}$$

(X, Y) étant des coordonnées affines d'un point de la courbe, a1, a2, a3, a4, et a6 étant des paramètres de la courbe elliptique, et le résultat de l'addition étant un troisième point P3 défini sur la courbe elliptique par des troisièmes coordonnées affines (X3, Y3), le deuxième point P2 étant différent de l'inverse (-P1) du premier point P1, les troisièmes coordonnées affines (X3, Y3) étant calculées au moyen des relations suivantes :

$$\texttt{X3 = }\lambda^2 \texttt{ + a1}\times\lambda \texttt{ - a2 - X1 - X2}$$

$$\texttt{Y3 = -(}\lambda\texttt{+a1)}\times\texttt{X3 - }\mu\texttt{ - a3}$$

avec :

$$\mu \texttt{ = Y1 - }\lambda\times\texttt{X1}$$

le procédé étant **caractérisé en ce que** $\lambda$ est calculé en divisant $(\text{X1}^2+\text{X1}\times\text{X2}+\text{X2}^2+\text{a2}\times\text{X1}+\text{a2}\times\text{X2}+\text{a4-a1}\times\text{Y1})$ par (Y1+Y2+a1$\times$X1+a3).

2. Procédé cryptographique selon la revendication 1, **caractérisé en ce que** la courbe elliptique est définie sur un corps de caractéristique différente de 2 ou 3 et répond à l'équation de Weierstrass simplifiée de type :

$$\texttt{Y}^2 \texttt{ = X}^3 \texttt{ + a}\times\texttt{X + b,}$$

et **en ce que** les paramètres a1 à a6 de la courbe elliptique sont utilisés avec les valeurs a1 = 0; a2 = 0; a3 = 0; a4 = a; et a6 = b.

3. Procédé cryptographique selon la revendication 1, **caractérisé en ce que** la courbe elliptique est non supersingulière, est définie sur un corps de caractéristique égale à 2, et répond à l'équation de Weierstrass simplifiée de type :

$$\texttt{Y}^2 \texttt{ + XY = X}^3 \texttt{ + a}\times\texttt{X}^2 \texttt{ + b,}$$

et **en ce que** les paramètres a1 à a6 de la courbe elliptique sont utilisés avec les valeurs a1 = 1; a2 = a; a3 = 0; a4 = 0; et a6 = b.

4.  Procédé selon l'une quelconque des revendications 1 à 3, au cours duquel on réalise une opération de multiplication scalaire appliquée à des points d'une courbe elliptique.

5.  Composant électronique adapté à la mise en oeuvre d'un procédé cryptographique au cours duquel on réalise une addition d'un premier point P1 défini par des premières coordonnées affines (X1, Y1) et d'un deuxième point P2 défini par des deuxièmes coordonnées affines (X2, Y2), ces premier et deuxième points appartenant à une courbe elliptique définie par une équation de Weierstrass de type :

$$Y^2 + a1{\times}X{\times}Y + a3{\times}Y = X^3 + a2{\times}X^2 + a4{\times}X + a6,$$

(X, Y) étant des coordonnées affines d'un point de la courbe, a1, a2, a3, a4, et a6 étant des paramètres de la courbe elliptique, et le résultat de l'addition étant un troisième point P3 défini sur la courbe elliptique par des troisièmes coordonnées affines (X3, Y3), le deuxième point P2 étant différent de l'inverse (-P1) du premier point P1, le composant comprenant une mémoire (4, 6, 8)comprenant des premiers, deuxièmes et troisièmes registres pour stocker respectivement les coordonnées affines des premier, deuxième et troisième points (P1, P2, P3), le composant étant **caractérisé en ce qu'**il comprend également des moyens de calcul programmés pour calculer les troisièmes coordonnées affines (X3, Y3) au moyen des relations suivantes :

$$X3 = \lambda^2 + a1{\times}\lambda - a2 - X1 - X2$$

$$Y3 = -(\lambda+a1){\times}X3 - \mu - a3$$

avec :

$$\mu = Y1 - \lambda{\times}X1 \text{ et}$$

$\lambda$ calculé en divisant $(X1^2+X1{\times}X2+X2^2+a2{\times}X1+a2{\times}X2+a4-a1{\times}Y1)$ par $(Y1+Y2+a1{\times}X1+a3)$.

6.  Carte à puce comprenant un composant électronique selon la revendication 5.

**Claims**

1.  A cryptographic method in which automatic means perform an addition of a first point P1 defined by first affine co-ordinates (X1, Y1) and of a second point P2 defined by second affine co-ordinates (X2, Y2), said first and second points belonging to an elliptic curve defined by a Weierstrass equation of the following type:

$$Y^2 + a1{\times}X{\times}Y + a3{\times}Y = X^3 + a2{\times}X^2 + a4{\times}X + a6$$

(X, Y) being affine co-ordinates of a point on the curve, a1, a2, a3, a4, and a6 being parameters of the elliptic curve, and the result of the addition being a third point P3 defined on the elliptic curve by third affine co-ordinates (X3, Y3), the second point P2 being different from the inverse (-P1) of the first point P1, the third affine co-ordinates (X3, Y3) being computed by means of the following relationships:

$$X3 = \lambda^2 + a1{\times}\lambda - a2 - X1 - X2$$

$$Y3 = -(\lambda + a1) \times X3 - \mu - a3$$

where:

$$\mu = Y1 - \lambda \times X1$$

the method being **characterized in that** $\lambda$ is computed by dividing ($X1^2+X1\times X2+X2^2+a2\times X1+a2\times X2+a4$-a1xY1) by ($Y1+Y2+a1\times X1+a3$).

2. A cryptographic method according to claim 1, **characterized in that** the elliptic curve is defined over a field of characteristic different from 2 or 3 and satisfies the simplified Weierstrass equation of the following type:

$$Y^2 = X^3 + a\times X + b;$$

and **in that** the parameters a1 to a6 of the elliptic curve are used with the values a1 = 0; a2 = 0; a3 = 0; a4 = a; and a6 = b.

3. A cryptographic method according to claim 1, **characterized in that** the elliptic curve is non-supersingular, is defined over a field of characteristic equal to 2, and satisfies the simplified Weierstrass equation of the following type:

$$Y^2 + XY = X^3 + a\times X^2 + b;$$

and **in that** the parameters a1 to a6 of the elliptic curve are used with the values a1 = 1; a2 = a; a3 = 0; a4 = 0; and a6 = b.

4. A method according to any one of claims 1 to 3, during which a scalar multiplication operation is performed that is applied to points on an elliptic curve.

5. An electronic component adapted to implementing a cryptographic method during which an addition is performed of a first point P1 defined by first affine co-ordinates (X1, Y1) and of a second point P2 defined by second affine co-ordinates (X2, Y2), said first and second points belonging to an elliptic curve defined by a Weierstrass equation of the following type:

$$Y^2 + a1\times X\times Y + a3\times Y = X^3 + a2\times X^2 + a4\times X + a6$$

(X, Y) being affine co-ordinates of a point on the curve, a1, a2, a3, a4, and a6 being parameters of the elliptic curve, and the result of the addition being a third point P3 defined on the elliptic curve by third affine co-ordinates (X3, Y3), the second point P2 being different from the inverse (-P1) of the first point P1;
the component including a memory (4, 6, 8) comprising first, second, and third registers for storing respectively the affine co-ordinates of the first, of the second, and of the third points (P1, P2, P3);
the component being **characterized in that** it further includes computation means programmed for computing the third affine co-ordinates (X3, Y3) by means of the following relationships:

$$X3 = \lambda^2 + a1\times\lambda - a2 - X1 - X2$$

$$Y3 = -(\lambda + a1) \times X3 - \mu - a3$$

where:

$$\mu = Y1 - \lambda \times X1$$

$\lambda$ being computed by dividing (X1$^2$+X1$\times$X2+X2$^2$+a2$\times$X1+a2$\times$X2+a4-a1$\times$Y1) by (Y1+Y2+a1$\times$X1+a3).

**6.** A smart card including an electronic component according to claim 5.

**Patentansprüche**

**1.** Kryptographisches Verfahren, bei dem automatische Mittel eine Addition eines durch erste affine Koordinaten (X1, Y1) definierten ersten Punktes P1 und eines durch zweite affine Koordinaten (X2, Y2) definierten zweiten Punktes P2 realisieren, wobei diese ersten und zweiten Punkte einer durch eine Weierstraß-Gleichung definierte elliptischen Kurve vom folgenden Typ angehören:

$$Y^2 + a1*X*Y + a*Y = X^3 + a2*X^2 + a4*X + a6,$$

wobei (X, Y) affine Koordinaten eines Punkts der Kurve sind, a1, a2, a3, a4 und a6 Parameter der elliptischen Kurve sind und das Ergebnis der Addition ein auf der elliptischen Kurve durch affine dritte Koordinaten (X3, Y3) definierter dritter Punkt P3 sind, wobei der zweite Punkt P2 unterschiedlich von der Umkehrung (-P1) des ersten Punktes P1 ist, wobei die dritten affinen Koordinaten (X3, Y3) mittels der folgenden Funktionen berechnet werden:

$$X3 = \lambda^2 + a1*\lambda - a2 - X1 - X2$$

$$Y3 = - (\lambda+a1)*X3 - \mu - a3$$

wobei:

$$\mu = Y1 - \lambda*X1$$

wobei das Verfahren **dadurch gekennzeichnet ist, dass** $\lambda$ durch Division von (X1$^2$ - X1*X2 + X2$^2$ + a2 * X1 + a2 * X2 + a4 - a1 * Y1) durch (Y1 + Y2 + a1 * X1 + a3) berechnet wird.

**2.** Kryptographisches Verfahren gemäß Anspruch 1, **dadurch gekennzeichnet, dass** die elliptische Kurve auf einem Körper von 2 oder 3 unterschiedlicher Merkmale definiert wird und der vereinfachten Weierstraß-Gleichung vom folgenden Typ entspricht:

$$Y^2 = X^3 + a*X + b,$$

und dass die Parameter a1 bis a6 der elliptischen Kurve mit den Werten a1 = 0; a2 = 0; a3 = 0; a4 = a; und a6 = b eingesetzt werden.

**3.** Kryptographisches Verfahren gemäß Anspruch 1, **dadurch gekennzeichnet, dass** die elliptische Kurve nicht supersingulär ist, auf einem Körper von Merkmalen gleich 2 definiert ist und der vereinfachten Weierstraß-Gleichung vom folgenden Typ entspricht:

$$Y^2 + XY = X^3 + a *X2 + b,$$

und dass die Parameter a1 bis a6 der elliptischen Kurve mit den Werten a1 = 1; a2 = a; a3 = 0; a4 = 0; und a6 = b eingesetzt werden.

4. Verfahren gemäß Anspruch 1 bis 3, in dessen Verlauf eine skalare, auf Punkte einer elliptischen Kurve angewendete Multiplikationsoperation realisiert wird.

5. Zur Umsetzung eines kryptographischen Prozesses, in dessen Verlauf eine Addition eines durch erste affine Koordinaten (X1, Y1) definierten ersten Punktes P1 und eines durch zweite affine Koordinaten (X2, Y2) definierten zweiten Punktes P2 realisiert wird geeignete elektronische Komponente, wobei diese ersten und zweiten Punkte einer durch eine Weierstraß-Gleichung definierten elliptischen Kurve vom folgenden Typ angehören:

$$Y^2 + a1*X*Y + a3*Y = X^3 + a2*X2 + a4*X + a6,$$

wobei (X, Y) affine Koordinaten eines Punktes der Kurve sind, a1, a2, a3, a4 und a6 Parameter der elliptischen Kurve und das Ergebnis der Addition ein auf der elliptischen Kurve durch dritte affine Koordinaten (X3, Y3) definierter dritter Punkt P3 ist, wobei der zweite Punkt P2 von der Umkehrung (-P1) des ersten Punktes P1 unterschiedlich ist, wobei die Komponente einen Speicher (4, 6, 9) mit ersten, zweiten und dritten Verzeichnissen zum jeweiligen Speichern der affinen Koordinaten der ersten, zweiten und dritten Punkte (P1, P2, P3) umfasst, wobei die Komponente **dadurch gekennzeichnet ist, dass** sie ebenfalls zur Berechung der dritten affinen Koordinaten (X3, Y3) mittels der folgenden Funktionen programmierte Berechnungsmittel umfasst:

$$X3 = \lambda^2 + a1* \lambda - a2 - X1 - X2$$

$$Y3 = - (\lambda + a1) *X3 - \mu - a3$$

wobei:

$$\mu = Y1 - \lambda*X1$$

und
λ per Division von $(X1^2 + X1*X2 + X2^2 + a2*X1 + a2 * X2 + a4 - a1*Y1)$ durch (Y1 + Y2 + a1*X1 + a3) berechnet wird.

6. Chipkarte mit einer elektronischen Komponente gemäß Anspruch 5.